Europäisches Patentamt

European Patent Office

Office européen des brevets

(11) Numéro de publication: **0 248 730 B1**

# FASCICULE DE BREVET EUROPEEN

(45) Date de publication de fascicule du brevet:
**29.01.92**

(51) Int. Cl.⁵: **H04N 5/225**, H04N 9/093

(21) Numéro de dépôt: **87401234.7**

(22) Date de dépôt: **02.06.87**

(54) **Procédé de positionnement relatif de plusieurs capteurs solides matriciels équipant une caméra et dispositif pour la mise en oeuvre d'un tel procédé.**

(30) Priorité: **06.06.86 FR 8608221**

(43) Date de publication de la demande:
**09.12.87 Bulletin 87/50**

(45) Mention de la délivrance du brevet:
**29.01.92 Bulletin 92/05**

(84) Etats contractants désignés:
**DE GB IT**

(56) Documents cités:

**PATENT ABSTRACTS OF JAPAN, vol. 7, no. 255 (E-210)[1400], 12 novembre 1983; & JP-A-58 140 156 (CANON K.K.) 19-08-1983**

**PATENT ABSTRACTS OF JAPAN, vol. 9, no. 10 (E-290)[1733], 17 janvier 1985; & JP-A-59 161 187 (HITACHI SEISAKUSHO K.K.) 11-09-1984**

**PATENT ABSTRACTS OF JAPAN, vol. 8, no. 66 (E-234)[1503], 28 mars 1984; & JP-A-58 215 874 (CANON K.K.) 15-12-1983**
(73) Titulaire: **THOMSON-CSF**
**51, Esplanade du Général de Gaulle**
**F-92800 Puteaux(FR)**

(72) Inventeur: **Poque, Jean-Louis**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

# Description

La présente invention concerne un système de positionnement de plusieurs capteurs solides matriciels équipant une caméra, afin d'assurer une coïncidence déterminée des images détectées.

Compte tenu des progrès techniques réalisés dans le domaine des capteurs matriciels solides, ces matériels sont de plus en plus utilisés pour équiper des caméras de prise de vue miniatures et qui présentent une bonne définition d'images. Les capteurs solides matriciels sont constitués avec des dispositifs à transfert de charges (généralement des circuits CCD, abréviation de la terminologie anglo-saxonne Charge Coupled Device). Pour la prise de vue couleur la caméra comporte au moins deux, généralement trois, capteurs matriciels.

Ces équipements présentent un problème qui est la superposition des images et qui ne peut être résolue que par un positionnement très précis et fiable des capteurs solides. Par superposition on entend soit la coïncidence exacte pixel par pixel, soit une coïncidence relative déterminée, par exemple, un décalage correspondant au pas d'un demi-pixel dans le cas de matrices à interligne. Les matrices à interligne sont utilisées pour accroître la résolution de l'image en multipliant par deux le nombre de points grâce à deux matrices.

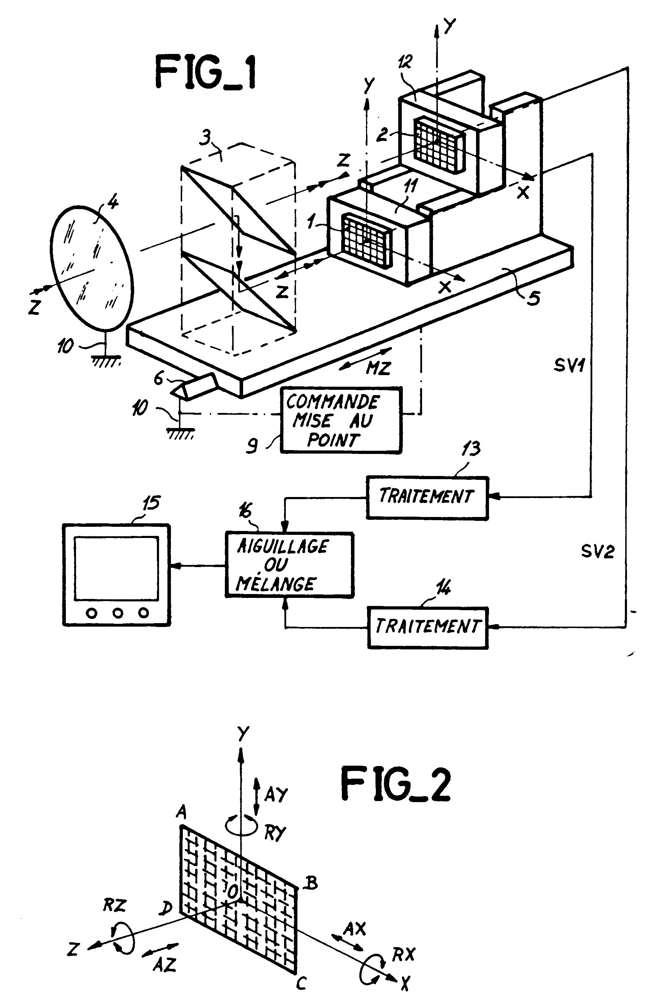

Le positionnement relatif des capteurs pour assurer la coïncidence désirée présente de multiples difficultés. En effet, il faut considérer en ce reportant à la figure 2 qu'il y a en tout six réglages par capteur, trois sont des translations AX, AY,AZ selon les axes X,Y,Z, Z étant l'axe optique et XY les axes conventionnels du plan photosensible du capteur, la direction X correspondant à la direction des lignes. Les trois autres réglages sont les rotations RX, RY autour de X,Y et RZ autour de l'axe optique. Les réglages d'inclinaison correspondent aux rotations RX et RY autour de X et de Y qui permettent d'amener le plan photosensible ABCD orthogonal à la direction de l'axe optique Z qui aboutit au détecteur. Deux autres réglages dits de cadrage permettent d'effectuer les déplacements AY et AY de manière à faire coïncider sensiblement la trace O de l'axe optique Z avec le centre du capteur correspondant au centre de l'aire détectrice rectangulaire ABCD. Le réglage par rotation RZ autour de l'axe optique Z permet d'orienter l'image de manière désirée et le réglage par translation AZ le long de cet axe permet d'effectuer la mise au point de l'image sur le plan détecteur. (Un tel positionnement est décrit dans la demande EP-A-0231382 publiée le 12.08.87).

Les réglages d'inclinaison RX et RY étant faits, on voit qu'il reste encore quatre réglages à effectuer par capteur ce qui nécessite des moyens de positionnement associés relativement complexes et une précision qui peut s'avérer insuffisante. En effet, la précision requise peut atteindre 2 à 3 microns dans le cas concerné et une fois les positionnements obtenus il est nécessaire de les figer par des blocages fiables. Il faut considérer que le blocage d'une pièce par rapport à une autre selon un ou plusieurs degrés de liberté peut présenter une influence sur les réglages déjà exécutés, notamment sur ceux qui doivent être bloqués à leur tour ce qui va au détriment de la précision souhaitée.

Le but de l'invention est de remédier aux inconvénients précités en permettant le positionnement mécanique de deux ou trois capteurs matriciels solides derrière un système optique récepteur, avec une grande précision et une grande stabilité. Pour fixer les idées, en ce qui concerne les réglages, les translations peuvent être limitées, dans une plage de l'ordre du millimètre et les rotations de l'ordre du milliradiant, avec une précision de positionnement de l'ordre du micron.

La solution proposée permet de remédier aux deux facteurs essentiels d'instabilité qui sont à prendre en compte : le déréglage au moment de l'immobilisation des réglages et le déréglage par effet des dilatations thermiques et des vibrations mécaniques.

Un objet de l'invention est de réduire le nombre des réglages associés à chacun des capteurs ; en dehors des réglages d'inclinaison communs à tous les capteurs, ces réglages sont réduits à deux par capteur dans le cas d'un couple de capteurs. Dans une version à trois capteurs les réglages supplémentaires à ceux d'inclinaison sont de deux pour l'un des capteurs et de trois pour chacun des deux autres capteurs. Le choix des réglages est fait en sorte de verrouiller les pièces par serrage mécanique sans provoquer de déréglage des positionnements déjà effectués.

Selon l'invention, il est proposé un procédé de positionnement relatif de plusieurs capteurs solides matriciels équipant une caméra selon la revendication 1, et un dispositif de positionnement pour la mise en oeuvre d'un tel procédé selon la revendication 2.

Les particularités et avantages de l'invention apparaîtront dans la description qui suit donnée à titre d'exemple, à l'aide des figures annexées qui représentent :

- Fig.1, un schéma général d'une caméra équipée de plusieurs capteurs solides matriciels et de moyens de positionnement relatifs des capteurs ;

- Fig.2, un schéma de rappel des six réglages pouvant intervenir au niveau d'un capteur ;

- Fig.3, un schéma relatif aux moyens de positionnement utilisés conformément à l'invention dans une version à deux capteurs matriciels ;
- Fig.4, un schéma partiel d'une variante de réalisation de la pièce de blocage du réglage d'orientation ;
- Fig.5, un schéma relatif aux moyens de positionnement utilisés conformément à l'invention dans une version à trois capteurs matriciels.

La figure 1 rappelle les moyens essentiels présentés par une caméra à capteurs solides. Dans la version figurée la caméra comporte seulement deux capteurs matriciels 1 et 2. Ces capteurs sont disposés sur les trajets optiques de sortie d'un dispositif séparateur de voies optiques 3 qui est lui-même placé en aval d'un objectif optique récepteur 4. Le séparateur 3 et les capteurs 1 et 2 sont montés solidaires mécaniquement sur une pièce support 5, chacun des capteurs étant couplé à des moyens de positionnement 11 et 12 qui comportent les réglages et les blocages correspondants. La pièce support 5 est déplaçable relativement à l'objectif optique 4 selon une direction parallèle à celle de l'axe optique d'entrée Z. Les moyens correspondants sont symbolisés par un élément de guidage telle une glissière 6 le long de laquelle peut coulisser une semelle de l'élément support 5. La glissière 6 est solidaire du bâti 10 constituant l'enveloppe de la caméra et qui est symbolisée par des hachures). Le circuit 9 représente la commande de mise au point qui permet ce déplacement mécanique relatif indiqué MZ. Il est entendu que la commande mécanique peut s'exercer aussi bien sur le support 5 que sur l'objectif si celui-ci est équipé d'une commande de mise au point selon des techniques connues.

Les signaux détectés par les capteurs 1 et 2, SV1 et SV2 respectivement, sont appliqués à des circuits de traitement 13 et 14 puis transmis à l'extérieur vers un moniteur de visualisation 15 par exemple. Le circuit 16 représente un circuit d'aiguillage pour sélectionner la première ou la seconde voie, et un circuit mélangeur pour mélanger les deux voies vidéo. Les circuits 13, 14 peuvent être, sinon en totalité du moins en partie, inclus dans la caméra avec les circuits conventionnels de lecture de la matrice et de préamplification vidéo. Les circuits 16 peuvent être inclus dans le moniteur 15 en particulier le circuit mélangeur pour visualiser une image en couleur.

Les moyens de positionnement 11 et 12 qui sont couplés mécaniquement aux capteurs 1 et 2 respectivement comportent chacun les réglages d'inclinaison correspondant aux rotations RX et RY à effectuer autour des deux axes X et Y (Voir Fig. 2). Ces réglages sont effectués en premier lieu de manière à rendre la surface sensible A, B, C, D du capteur perpendiculaire à l'axe optique Z qui parvient à celui-ci. Il reste ensuite à effectuer les réglages de cadrage par translation AX et AY selon les axes X et Y, le réglage d'harmonisation de mise au point AZ par translation selon l'axe optique Z et le réglage d'orientation par rotation RZ autour de l'axe optique Z. On entend par harmonisation que la mise au point étant considérée effectuée sur l'un des capteurs par le déplacement relatif MZ de l'objectif 4 vis-à-vis du support 5, il reste à obtenir un résultat identique sur l'autre capteur au moyen cette fois du réglage AZ correspondant ce qui revient à harmoniser ce paramètre pour les deux capteurs par annulation de l'écart différentiel de mise au point.

Conformément à l'invention les quatre derniers réglages précités sont répartis sur les deux voies de détection, chacun des capteurs 1 et 2 ne comportant qu'un couple de ces réglages.

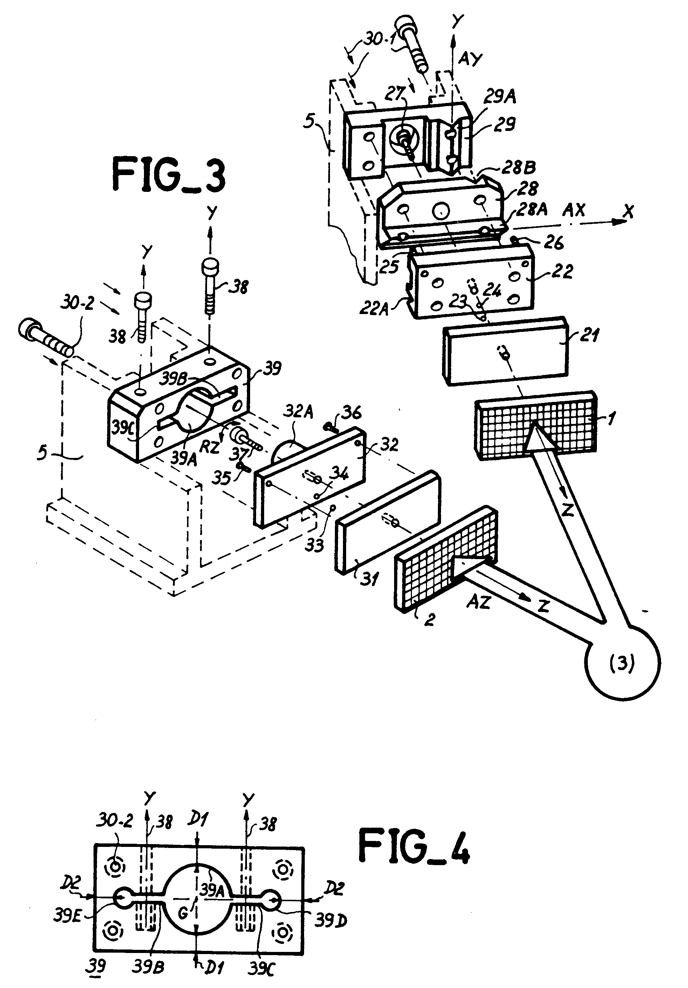

La figure 3 représente de manière plus détaillée un exemple de réalisation correspondant. Les moyens de réglage associés au capteur 1 comportent en sus des réglages d'inclinaison RZ et RY, un premier couple de réglage, le couple de réglages de cadrage AX et AY, tandis que les réglages associés au capteur 2 comportent en sus des réglages d'inclinaison RX et RY, celui d'harmonisation de mise au point AZ et celui d'orientation d'image RZ,

Les pièces représentant les moyens de positionnement sont des plaquettes de forme parallélépipédique pouvant comporter des usinages ,tels des rainures et des glissières pour effectuer les translations respectives, et ainsi également qu'un axe et une partie évidée pour effectuer la rotation autour de l'axe Z, sans compter les autres usinages appropriés pour le passage d'éléments de vissage par exemple.

On considère d'abord le réglage d'inclinaison qui est effectué en premier lieu pour chaque capteur. Le capteur, 1 par exemple, est monté par collage ou vissage sur une plaque support 21 parallélépipédique, cette plaque 21 étant suivie d'une deuxième plaque 22. Les déplacements d'inclinaison à effectuer sont assez faibles, dans la pratique de 1 à 2/10èmes de millimètre. Une solution possible comporte, comme représenté, un point fixe au moyen d'une bille 23 qui vient se loger dans une partie sphérique 24 usinée dans la plaque 22 et deux points mobiles de réglage constitués par les extrémités des vis 25 et 26 qui débouchent après vissage dans la pièce 22 à l'extérieur de celle-ci et viennent s'appuyer sur l'arrière de la pièce 21 supportant le capteur. La plaquette 21 comporte ainsi trois points d'appui constitués par les extrémités des vis 25 et 26 et par la bille 24. La manoeuvre des vis 25 et 26 entraîne entre autre les rotations RX et RY désirées permettant de positionner le plan du capteur 1 perpendiculaire à son axe optique Z. Une vis centrale de blocage 27 permet le blocage selon la direction de l'axe Z en passant à travers un alésage de la pièce 22 et en se vissant sur la pièce 21. Pour effectuer le réglage d'inclinaison on peut procéder, de manière connue, à une autocollimation consistant à former à l'image à l'infini d'une mire lumineuse et à régler RX et RY pour effectuer la coïncidence de cette mire avec l'image de cette mire réfléchie par la surface du capteur. L'image de la mire est avantageusement une croix dans un cercle. Le réglage de l'inclinaison pour le second capteur 2 est identique, indiqué par les pièces homologues 31 à 37. Les usinages des pièces sont déterminés en sorte que la vis 27 passe librement à travers la pièce 22 et vient se visser dans la pièce 21 où son extrémité ne peut atteindre le capteur 1. Il en est de même pour la pièce 37 à travers la pièce 32 pour bloquer la pièce 31 qui supporte le capteur 2.

Les autres éléments de positionnement et de réglage couplés au capteur 1 comportent les plaques suivantes 28 et 29. L'ensemble formé par le capteur 1, son support 21 et la plaque 22 est maintenu par la vis 27. Cet ensemble est déplacé par translation AX selon la direction X du capteur avec un débattement qui reste dans une plage de l'ordre du millimètre par exemple. Le déplacement est rendu possible par une glissière 28A de la pièce 28 qui coopère avec une rainure 22A usinée dans la pièce 22. De même, le déplacement par translation AY selon l'axe Y avec une amplitude également maximale de l'ordre du millimètre, est assuré par une glissière 29A de la plaque 29 placée en face de la rainure 28B de la pièce 28. La pièce 29 vient s'appliquer par sa face arrière sur la pièce support 5. Des vis 30-1 se vissent dans la pièce 22 après traversée des pièces 29 et 28 afin de bloquer l'ensemble 29, 28, 22, 21 et 1 sur le support 5, la direction de blocage étant la direction de l'axe optique Z perpendiculaire à X et Y et donc perpendiculaire aux deux directions de réglage. Les trous de passage des vis 30-1 correspondantes dans les pièces 29, 28 sont alésées à un diamètre supérieur à celui des vis de manière à tenir compte de la plage de débattement maximal des translations AX et AY. Les vis 30-1 peuvent être au nombre de 4 disposées deux par deux latéralement comme schématisé.

Pour assurer la tenue de l'ensemble 21 à 28 et du capteur 1 lors du réglage en Y, le déserrage des quatre vis 30-1 est effectué de manière limité pour laisser subsister un dur avec un certain coefficient de frottement qui maintient immobile cet ensemble après la translation AY désirée et autorise ensuite le blocage des vis 30-1 sans que la position en Y ait changé. Le frottement peut être obtenu aisément en utilisant par exemple des rondelles en matériau plastique entre les têtes de vis 30-1 et le support 5.

Les réglages d'inclinaison et de cadrage en X et en Y étant effectués pour ce premier capteur 1, ainsi que les blocages correspondants, il se trouve figé mécaniquement par rapport au support 5. On effectue alors, avant de procéder au réglage sur le second capteur 2, à une mise au point générale d'image sur le capteur 1 par déplacement relatif MZ du support 5 vis-à-vis de l'objectif 4, de manière à ajuster le positionnement de la face photosensible du capteur 1 dans le plan image de l'objectif 4, la visualisation d'image étant perceptible sur l'écran du moniteur annexe 15.

On peut maintenant procéder aux réglages AZ et RZ sur la voie du second capteur 2. Pour permettre ces réglages la pièce 32 comporte une partie cylindrique 32A qui vient s'emboîter dans un logement cylindrique 39A de la pièce 39. Le logement cylindrique est prolongé de fentes latérales 39B et 39C qui confèrent une certaine élasticité et une plus grande précision lors du blocage par les vis 38. Ces usinages coplanaires selon un diamètre du cylindre permettent de maintenir en position l'axe optique lors du serrage des vis 38. Un ensemble de quatre vis 30-2 rendent solidaires du support 5 la pièce 39 qui comporte des trous taraudés correspondants.

La figure 4 représente une variante de réalisation de la pièce 39 suivant laquelle les fentes 39B et 39C sont prolongées en extrémité par des parties cylindriques terminales 39D et 39E respectivement, et également orientées selon la direction de l'axe optique Z. Dans les deux cas de figure les usinages de ces évidements sont réalisés en sorte de respecter la symétrie avec des épaisseurs de matière égales de part et d'autre représentée par les distances D1 et D2.

L'harmonisation de mise au point de la deuxième voie est obtenue en déplaçant par translation AZ le long de l'axe optique Z l'ensemble des pièces 2, 31 et 32, cet ensemble étant bloqué par la vis 37 après le réglage préliminaire d'inclinaison. La mise au point est contrôlable avec le moniteur 15 en s'assurant de la netteté de l'image vidéo de cette voie. L'ensemble 2, 31 et 32 est ensuite tourné autour de l'axe Z pour effectuer le réglage d'orientation RZ désiré.
Ce réglage a pour but d'amener la direction X du second capteur en coïncidence avec celle X du premier capteur qui constitue la référence d'orientation. Le réglage d'orientation est minime, sa course est généralement inférieure à 1 milliradiant ; il s'effectue par action dans un plan perpendiculaire à Z et donc n'influence pas sur le réglage de mise au point AZ précédent. Pour contrôler l'orientation, on visualise les deux voies vidéo simultanément sur le moniteur 15. Le blocage des réglages AZ et RZ s'effectue ensuite par les deux vis 38 selon une direction perpendiculaire à l'axe Z, les vis 38 ayant par exemple la direction Y indiquée dans le plan XY. Les vis 38 agissent par pression sur la pièce 39 en produisant un rapprochement des surfaces des fentes 39A et 39C.

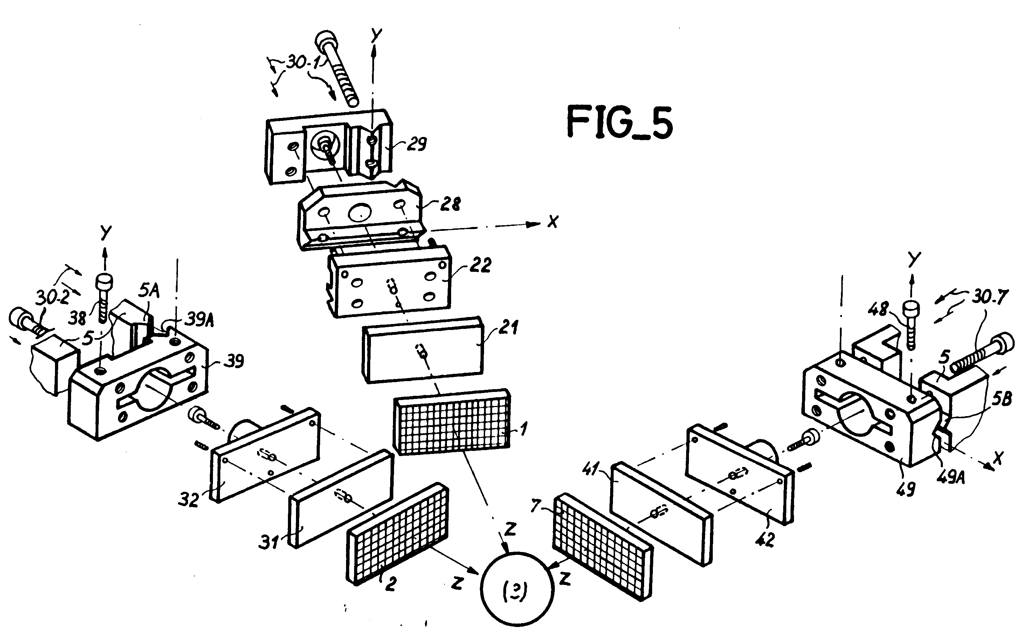

On se reporte maintenant à une version à trois capteurs 1,2 et 7 représentée sur la figure 5 avec les moyens de positionnement correspondants. Cette solution peut être utilisée pour une caméra de prise de vues couleur, trichrome. A titre de simplification, les parties support 5 n'ont été reproduites que partiellement sur la deuxième et la troisième voie pour montrer des guidages en X et en Y. Les deux premières plaques de chaque voie comportent, comme précédemment la plaque support du capteur et la suivante avec les moyens d'inclinaison qui sont identiques pour les trois voies. La bille peut être remplacée par un pion ou un pivot sphérique à l'endroit des usinages sphériques de la version figure 3.

Ainsi qu'on peut s'en rendre compte, les moyens 21,22,28 et 29 associés au premier capteur 1 sont les mêmes que ceux utilisés précédemment pour effectuer le cadrage en X et en Y.

Les moyens de positionnement qui sont associés aux deux autres capteurs 2 et 7 comportent, pour la deuxième voie les pièces déjà signalées 31,32 et 39 avec une modification sur cette dernière pour permettre en outre un réglage de cadrage par translation en Y. La troisième voie comporte un ensemble de pièces similaires numérotés 41,42 et 49, la pièce 49 étant aménagée également pour permettre un réglage de cadrage mais cette fois selon la direction orthogonale X.

L'immobilisation des réglages du deuxième et du troisième capteurs pose un problème, les réglages en X et en Y se bloquant sur l'axe Z qui comporte lui-même des réglages. Par la solution retenue on immobilise en X ou en Y avant d'effectuer les réglages en Z de manière à s'affranchir d'un déréglage selon cette direction. Cette immobilisation s'effectue par blocage en Z des pièces 39 et 49 au moyen des vis 30-2 et 30-7 correspondantes ; ce blocage n'immobilise pas les réglages AZ et RZ qui peuvent ensuite être effectués sur ces voies et être bloqués finalement à l'aide de pièces 38 et 48.

Le troisième capteur 7 impose l'axe des Y, le second capteur 2 impose l'axe des X et le premier capteur 1 impose l'angle de référence d'orientation.

L'ordre des réglages se décompose de la manière suivante. On effectue tout d'abord les réglages d'inclinaison correspondant aux rotations RX et RY déjà cités.

Ces réglages préliminaires étant effectués pour les trois voies, les réglages restants comportent une première série relative aux réglages de cadrage en X et en Y sur la voie du capteur 1, en Y sur la voie du deuxième capteur 2, et en X sur la voie du troisième capteur 7. Ces réglages de cadrage s'effectuent dans un certain ordre ; on procède d'abord à la coïncidence des centres du troisième capteur 7 et du second capteur 2 qui comportent respectivement le réglage AX et le réglage AY. A cet effet, la pièce terminale 39 et 49 comporte par exemple une rainure 39A et 49A respectivement, et le support 5 comporte une glissière respectivement 5A et 5B en vis-à-vis de la rainure pour assurer le guidage dans la direction Y ou X correspondante. Ces réglages de cadrage sur les voies 2 et 7 étant effectués on procède aux blocages correspondants par les vis 30-2 et 30-7. On assure ensuite la coïncidence du centre du capteur 1 de la première voie avec le centre de chacune des voies précédentes par translations en X et en Y du montage correspondant de la première voie, ainsi qu'il a été décrit dans le cas de la figure 3. On assure ensuite le blocage par les vis 30-1 de la première voie.

Après ces opérations de cadrage on effectue sur la première voie qui ne comporte plus de réglage, la mise au point d'image par déplacement MZ entre l'optique 4 et le support 5, puisque cette première voie se trouve bloquée mécaniquement sur le support 5.

On procède alors à une deuxième série de réglages consistant à effectuer les réglages restant des voies 2 et 7, ceux d'orientation RZ et d'harmonisation de la mise au point AZ. La première voie constitue la référence d'orientation. Ces opérations s'effectuent de la manière déjà indiquée pour la voie 2 du montage à deux capteurs et se termine par le blocage à l'aide des vis 38 et 48. L'ensemble des trois voies se trouve ainsi positionné et prêt pour l'exploitation.

Le support 5 ainsi que les pièces de positionnement peuvent être constitués avantageusement dans un matériau tel que le titane qui présente un coefficient de dilatation voisin de celui des verres utilisés pour réaliser l'optique réceptrice 4.

**Revendications**

1. Procédé de positionnement relatif de plusieurs capteurs solides matriciels équipant une caméra, pour assurer une coïncidence déterminée des images détectées par ces capteurs, les capteurs étant disposés sur les trajets optiques de sortie d'un séparateur de voies optiques en aval de l'objectif récepteur de la caméra, le séparateur et les capteurs étant montés solidaires mécaniquement sur un support, ladite coïncidence étant effectuée selon les axes X et Y du plan détecteur des capteurs et selon un axe optique Z perpendiculaire à ce plan grâce à des réglages d'inclinaison par rotation autour des axes X et Y pour rendre un plan détecteur perpendiculaire à l'axe optique des réglages de cadrage par translation en X et en Y pour positionner un centre de capteur au centre correspondant à l'axe optique Z, et des réglages d'harmonisation de mise au point par translation le long de l'axe optique Z et d'orientation d'image par rotation autour de l'axe optique Z, le procédé étant caractérisé en ce que, dans le cas de deux capteurs (1, 2), il consiste successivement à :

- régler l'inclinaison du plan détecteur de chacun des capteurs (1, 2) et bloquer les réglages correspondants ;
- régler le cadrage du premier capteur (1) selon les directions X et Y et bloquer les réglages correspondants selon l'axe Z par un organe de blocage (30-1) ;
- mettre au point l'image sur le premier capteur (1) par déplacement relatif (MZ) de l'optique (4) par rapport au support (5) de l'ensemble séparateur et capteurs ;
- régler l'harmonisation de mise au point et l'orientation d'image du deuxième capteur (2) et bloquer les réglages correspondants selon une direction du plan XY.

2. Dispositif de positionnement pour la mise en oeuvre du procédé selon la revendication 1, comportant des moyens de réglages d'inclinaision des moyens de réglages de cadrage et des moyens de réglages d'harmonisation de mise au point et d'orientation d'image, les capteurs (1) et (2) étant couplés respectivement à des premier et second moyens de positionnement, le dispositif étant caractérisé en ce que le premier moyen de positionnement (11) comporte des moyens de réglage d'inclinaison (21-27) et des moyens de réglages de cadrage (28, 29) en X et Y et leur blocage en Z (30-1) rendant le premier capteur (1) solidaire du support (5), et en ce que le second moyen de positionnement (12) comporte des moyens de réglage d'inclinaison (31-37) et des moyens de réglages d'harmonisation de mise au point et d'orientation d'image (32, 39) avec leur blocage dans le plan XY (38).

3. Procédé de positionnement selon la revendication 1, caractérisé en ce que, dans le cas de trois capteurs (1, 2, 7), il consiste successivement à :

- régler l'inclinaison du plan directeur de chacun des capteurs (1, 2, 7) et bloquer les réglages correspondants ;
- régler le cadrage sur les trois capteurs en effectuant la coïncidence des centres du deuxième capteur (2) et du troisième capteur (7) avec immobilisation respective en Y et en X par un organe de blocage (30-2, 30-7) qui effectue un blocage selon l'axe optique Z et la solidarisation avec ledit support (5), puis coïncidence du centre du premier capteur (1) avec les centres des deux autres capteurs (2 et 7) par translation (AX et AY) en X et en Y et blocage de ces réglages selon la direction optique Z correspondante ;
- mettre au point l'image sur le premier capteur (1) par déplacement (MZ) de l'optique (4) relativement au support (5) de l'ensemble séparateur et capteurs ;
- régler l'orientation (RZ) du second (2) et du troisième (7) capteurs par rapport au premier capteur pris comme référence et réglage d'harmonisation de mise au point (AZ) de ces deux capteurs par translation le long de l'axe optique Z respectif, puis blocage respectif de ces deux réglages selon une direction du plan XY correspondant de chacune des voies.

4. Dispositif de positionnement pour la mise en oeuvre du procédé selon la revendication 3, comportant des moyens de réglages d'inclinaison, des moyens de réglages de cadrage et des moyens de réglage d'harmonisation de mise au point et d'orientation d'image, les capteurs (1), (2) et (7) étant couplés respectivement à des premier, deuxième et troisième moyens de positionnement, le dispositif étant caractérisé en ce que le premier moyen de positionnement comporte des moyens de réglages d'inclinaison (21-27) et des moyens de réglages de cadrage (28, 29), en ce que le deuxième moyen de positionnement comporte des moyens de réglages d'inclinaison (31-37), des moyens de réglages d'harmonisation de mise au point et d'orientation d'image (32, 39) et des moyens (39 A, 5A) pour un réglage de cadrage selon l'une des directions X ou Y, et en ce que le troisième moyen de positionnement comporte des moyens de réglage d'inclinaison (41-47), des moyens de réglages d'harmonisation de mise au point et d'orientation d'image (42-49) et des moyens (49A, 5B) pour un réglage de cadrage selon l'autre direction Y ou X.

5. Dispositif selon l'une quelconque des revendications 2 et 4, caractérisé en ce que pour effectuer l'harmonisation de mise au point (AZ) et l'orientation d'image (RZ) les moyens de positionnement correspondants comportent deux pièces l'une (32, 42) avec une partie cylindrique (32A) l'autre (39, 49) avec un évidement cylindrique (39A) correspondant, cet évidement cylindrique étant accru par des fentes latérales (39B, 39C) coplanaires selon un diamètre du cylindre, lesdites fentes donnant une certaine élasticité à la pièce lors du blocage, les parties évidées étant distribuées symétriquement dans le corps de la pièce pour avoir les mêmes épaisseurs de matière de part et d'autre en X et en Y (D1, D2) de manière à préserver le centrage (G) sur l'axe optique Z correspondant.

6. Dispositif selon l'une quelconque des revendications 2, 4 et 5, caractérisé en ce que les moyens de positionnement de la première voie correspondant au capteur 1 comportent, une première plaque (21) sur laquelle est monté le capteur, une deuxième plaque (22) pourvue d'un dispositif de réglage d'inclinaison à trois points au moyen d'une bille (23) et de deux vis (25 et 26) ladite deuxième pièce comportant une rainure (22A) de direction X, une troisième pièce (28) comportant une glissière (28A) en vis-à-vis de ladite rainure, ladite troisième pièce comportant également une rainure de 28B de direction Y, et une quatrième pièce 29 comportant une glissière 29A de direction Y en vis-à-vis de ladite rainure de direction Y, et des moyens de blocage par vissage (27, 30-1) des réglages d'inclinaison et de cadrage.

7. Dispositif selon la revendication 6, caractérisé en ce que les moyens de positionnement de la voie correspondant au deuxième capteur (2) comportent de manière homologue deux premières plaques (31 et 32) et ledit dispositif de réglage d'inclinaison et le blocage correspondant (37), ladite deuxième plaque (32) comportant une partie cylindrique, une troisième plaque (39) solidaire du support (5) étant pourvue d'un évidement alésé (39A) correspondant audit cylindre.

**Claims**

1. A method for relatively positioning a plurality of matrix sensors fitted in a camera, in order to ensure a predetermined coincidence of the images detected by the sensors, the sensors being disposed on the output optical paths of an optical path separator following the input objective of the camera, the separator and the sensors being arranged in a mechanically linked manner on a support, the said coincidence being effected along the axes X and Y of the detector plane of the sensors and along an optical axis Z perpendicular to the said plane owing to the provision of inclination regulating means by rotation about the X and Y axes in order to render a detector plane perpendicular to the optical axis Z, focusing regulation means by translation in X and Y directions in order to position a center of the sensor at the center corresponding to the optical axis Z, and harmonization regulation means for focusing by translation along the optical axis Z and orientation of the image by rotation about the optical axis Z, said method being characterized in that, in the case of two sensors (1 and 2), it successively consists of:
   - regulation of the inclination of the detector plane of each of the sensors (1 and 2) and locking the corresponding regulating means;
   - regulation of framing of the first sensor (1) along the directions X and Y and locking the regulation means along the axis Z by a locking device (30-1);
   - focusing of the image on the first sensor (1) by relative displacement (MZ) of the optical system (4) in relation to the support (5) of the arrangement comprising the separator and the sensors; and
   - regulation of the harmonization of the focus and the image orientation of the image of the second sensor (2) and locking the corresponding regulation means along the direction of the plane XY.

2. A device for positioning for performing the method as claimed in claim 1, comprising inclination regulation means, means for regulation of framing and means for regulation of harmonization of the focus and image orientation, the sensors (1) and (2) being coupled respectively with first and second means for positioning, the device being characterized in that the first positioning means (11) comprises means (21 through 27) for inclination regulation and means (28 and 29) for regulation of framing in the X and Y directions and the locking thereof in the Z direction (30-1) locking the first sensor (1) with respect to the support (5) and in that the second positioning means (12) comprises means (31 through 37) for the regulation of the inclination and means (32 and 39) for regulation of harmonization of the focus and the orientation of the image with the locking thereof in the XY plane (38).

3. The method of positioning as claimed in claim 1, characterized in that, in the case of there being three sensors (1, 2 and 7) it consists of successively of:
   - regulating the inclination of the director plane of each of the sensors (1, 2 and 7) and of locking the corresponding settings;

- regulation of the framing on the three sensors by establishing coincidence of the centers of the second sensor (2) and of the third sensor (7) and locking respectively in the Y and X directions by a locking means (30-2 and 30-7), which ensures locking along the optical axis Z and locking in relation to the said support (5) and then causing coincidence of the center of the first sensor (1) with the centers of the two other sensors (2 and 7) by translation (AX and AY) in the X and Y directions and locking of such settings along the direction of the corresponding optical axis Z;

- focusing the image on the first sensor (1) by displacement (MZ) of the optical system (4) in relation to the support (5) of the arrangement comprising the separator and the sensors; and

- regulation of the orientation (RZ) of the second (2) and of the third (7) sensor in relation of the first sensor taken as a reference and regulation of harmonization of the trim (AZ) of these two sensors by translation along the respective optical axis Z, then respective locking of these two settings in one direction of the plane XY corresponding to each of the paths.

4. A positioning device for performing the method as claimed in claim 3, comprising means for regulation of inclination, means for regulation of framing and means for regulation of harmonization of the focus and orientation of the image, the sensors (1), (2) and (7) being respectively coupled with first, second and third positioning means, the device being characterized in that the first positioning means comprises means for regulation of inclination (21 through 27) and means for regulation of framing (28 and 29), in that the second positioning means comprises means (31 through 37) for the regulation of inclination, means (32 and 39) for regulation of harmonization of focus and orientation of the image and means (39A and 5A) for the regulation of framing in one of the directions X and Y, and in that the third positioning means comprises means (41 through 47) for the regulation of inclination, means (42 through 49) for the regulation of harmonization of the focus and of the orientation of the image and means (49A and 5B) for the regulation of framing along the other direction Y or X.

5. The device as claimed in claim 2 or claim 4, characterized in that in order to perform the harmonization of the focus (AZ) and the orientation of the image (RZ) the corresponding positioning means comprise two members, the one (32 and 42) having a cylindrical part (32A) and the other (39 and 49) having a corresponding cylindrical hollow (39A), said cylindrical hollow being supplemented by coplanar lateral slots (39B and 39C) in accordance with one diameter of the cylinder, the said slots endowing the member with a certain elasticity when locked, the hollow parts being symmetrically distributed in the body of the member in order to provide the same thickness of the material on both sides with respect to X and Y (D1 and D2) in such a manner as to maintain centering (G) on the corresponding optical axis Z.

6. The device as claimed in any one of the preceding claims 2, 4 and 5, characterized in that the means for the positioning of the first path corresponding to the sensor 1 comprise a first plate (21) on which the sensor is mounted, a second plate (22) provided with a device for the regulation of the inclination about three points using a ball (23) and two screws (25 and 26), the said second member comprising a groove (22a) in the direction X, a third member (28) comprising a slide (28A) opposite to the said groove, the said third member also comprising a groove of 28B in the direction Y, and a fourth member (29) comprising a slide (29A) in the direction Y opposite to the said groove in the direction Y and locking means (27 and 30-1) acting by screwing for the means for regulation of inclination and framing.

7. The device as claimed in claim 6, characterized in that the positioning means for the path corresponding to the second sensor (2) comprise in an analogous manner two first plates (31 and 32) and the said device (37) for the regulation of inclination and the corresponding locking, the said second plate (32) comprising a cylindrical part, a third plate (39) linked to the support (5) being provided with a bored hollow (39A) corresponding to the said cylinder.

**Patentansprüche**

1. Verfahren zur relativen Positionierung einer Mehrzahl von zur Ausrüstung einer Kamera gehörigen matrixartigen Festkörper-Meßwertaufnehmern, mit dem eine bestimmte Koinzidenz der von diesen Meßwertaufnehmern erfaßten Bilder gewährleistet wird, wobei die Meßwertaufnehmer in den optischen Wegen der Ausgabe einer Lichtweg-Trenneinrichtung hinter dem Aufnahmeobjektiv der Kamera angeordnet sind, wobei die Trenneinrichtung und die Meßwertaufnehmer mechanisch verbunden auf einem Träger angebracht sind und wobei die Koinzidenz entlang der X- und Y-Achse der Erfassungsebene der Meßwertaufnehmer und entlang einer zu dieser Ebene senkrechten optischen Z-Achse aufgrund von Neigungseinstellungen durch die Drehung um die X- und Y-Achse für die Gewinnung einer zur optischen Z-Achse senkrechten Erfassungsebene, aufgrund von Ausschnittseinstellungen durch Translation in X- und Y- Richtung für die Positionierung eines Meßaufnehmerzentrums in dem der optischen Z-Achse entsprechenden Zentrum, aufgrund von Scharfabstimmungseinstellungen durch Translation entlang der optischen Z-Achse und aufgrund von Orientierungseinstellungen des Bildes durch Drehung um die optische Z-Achse bewerkstelligt wird, wobei das Verfahren dadurch gekennzeichnet ist, daß es im Falle zweier Meßwertaufnehmer (1, 2) nacheinander umfaßt:

- Einstellen der Neigung der Erfassungsebene eines jeden der Meßwertaufnehmer (1, 2) und Sperren der entsprechenden Einstellungen;
- Einstellen des Ausschnitts des ersten Meßwertaufnehmers (1) in X- und Y-Richtung und Sperren der entsprechenden Einstellungen entlang der Z-Achse mittels eines Sperrelementes (30-1);
- scharfes Einstellen des Bildes auf den ersten Meßwertaufnehmer (1) durch die relative Verschiebung (MZ) der Optik (4) in bezug auf den Träger (5) der die Trenneinrichtung und die Meßwertaufnehmer umfassenden Gesamtheit;
- Einstellen der Scharfabstimmung und der Orientierung des Bildes des zweiten Meßwertaufnehmers (2) und Sperren der entsprechenden Einstellungen in einer Richtung in der XY-Ebene.

2. Positionierungseinrichtung für die Ausführung des Verfahrens gemäß Anspruch 1, mit Neigungseinstellungsmitteln, Ausschnittseinstellungsmitteln und Scharfabstimmungs- und Bildorientierungs-Einstellungsmitteln, wobei die Meßwertaufnehmer (1) und (2) mit ersten bzw. mit zweiten Positionierungsmitteln gekoppelt sind, wobei die Einrichtung dadurch gekennzeichnet ist, daß das erste Positionierungsmittel (11) Mittel für die Neigungseinstellung (21-27) und Mittel für Ausschnittseinstellungen (28, 29) in X- und Y-Richtung und für deren Sperrung in Z-Richtung (30-1) umfaßt, woraus eine Verbindung des ersten Meßwertaufnehmers (1) mit dem Träger (5) resultiert, und daß das zweite Positionierungsmittel (12) Mittel für die Neigungseinstellung (31-37) und Mittel für die Einstellungen der Scharfabstimmung und der Bildorientierung (32, 39) bei deren Sperrung in der XY-Ebene (38) umfaßt.

3. Verfahren zur Positionierung gemäß Anspruch 1, dadurch gekennzeichnet, daß es im Falle dreier Meßwertaufnehmer (1, 2, 7) nacheinander umfaßt:

- Einstellen der Neigung der Erfassungsebene eines jeden der Meßwertaufnehmer (1, 2, 7) und Sperren der entsprechenden Einstellungen;
- Einstellen des Ausschnitts der drei Meßwertaufnehmer, indem zunächst die Koinzidenz zwischen den Zentren des zweiten Meßwertaufnehmers (2) und des dritten Meßwertaufnehmers (7) bei Immobilisierung in Y- bzw. in X- Richtung mittels eines Sperrelementes (30-2, 30-7), woraus eine Sperrung entlang der optischen Z-Achse und die Verbindung mit dem Träger (5) resultiert, und dann die Koinzidenz des Zentrums des ersten Meßwertaufnehmers (1) mit den Zentren der zwei anderen Meßwertaufnehmer (2 und 7), durch die Translation (AX und AY) in X- und Y-Richtung und die Sperrung dieser Einstellungen entlang der entsprechenden optischen Z-Richtung bewerkstelligt werden;
- scharfes Abstimmen des Bildes auf den ersten Meßwertaufnehmer (1) durch die Verschiebung (MZ) der Optik (4) relativ zum Träger (5) der die Trenneinrichtung und die Meßwertaufnehmer umfassenden Gesamtheit;
- Einstellen der Orientierung (RZ) des zweiten (2) und des dritten (7) Meßwertaufnehmers in bezug auf den als Bezugspunkt genommenen ersten Meßwertaufnehmer und Scharfabstimmungseinstellung (AZ) dieser zwei Meßwertaufnehmer durch die Translation entlang der jeweiligen optischen Z-Achse und anschließendes jeweiliges Sperren dieser zwei Einstellungen entlang einer Richtung in der XY-Ebene, die jedem der Wege entspricht.

4. Positionierungseinrichtung für die Ausführung des Verfahrens gemäß Anspruch 3, mit Neigungseinstellungsmitteln, Ausschnittseinstellungsmitteln und Scharfabstimmungs- und Bildorientierungseinstellungsmitteln, wobei die Meßwertaufnehmer (1), (2) und (7) mit ersten bzw. zweiten bzw. dritten Positionierungsmitteln gekoppelt sind, wobei die Einrichtung dadurch gekennzeichnet ist, daß das erste Positionierungsmittel Mittel für die Einstellungen der Neigung (21-27) und Mittel für die Einstellungen des Ausschnitts (28, 29) umfaßt, daß das zweite Positionierungsmittel Mittel für die Einstellungen der Neigung (31-37), Mittel für die Einstellungen der Scharfabstimmung und der Bildorientierung (32, 39) und Mittel (39A, 5A) für die Einstellung des Ausschnitts entweder entlang der X- oder entlang der Y- Richtung umfaßt und daß das dritte Postionierungsmittel Mittel für die Einstellung der Neigung (41-47), Mittel für die Einstellungen der Scharfabstimmung und der Bildorientierung (42-49) und Mittel (49A, 5B) für eine Einstellung des Ausschnitts entlang der jeweils anderen der X- oder Y- Richtungen umfaßt.

5. Einrichtung gemäß einem der Ansprüche 2 und 4, dadurch gekennzeichnet, daß für die Ausführung der Scharfabstimmung (AZ) und der Bildorientierung (RZ) die entsprechenden Positionierungsmittel zwei Stücke aufweisen, von denen eines (32, 42) einen zylindrischen Teil (32A) und das andere (39, 49) eine entsprechende zylindrische Aussparung (39A) besitzt, wobei diese zylindrische Aussparung durch zu einem Durchmesser des Zylinders koplanare seitliche Schlitze (39B, 39C) erweitert wird, die dem Stück bei der Sperrung eine bestimmte Elastizität verleihen, wobei die ausgesparten Teile im Körper des Stückes symmetrisch verteilt sind, um einerseits in X-Richtung und andererseits in Y-Richtung die gleichen Materialdicken (D1, D2) zu ergeben, derart, daß die Zentrierung (G) auf der entsprechenden Z-Achse erhalten bleibt.

6. Einrichtung gemäß einem der Ansprüche 2, 4 und 5, dadurch gekennzeichnet, daß die Positionierungsmittel des dem Meßwertaufnehmer (1) entsprechenden ersten Weges versehen sind mit einer ersten Platte (21), auf der der Meßwertaufnehmer angebracht ist, einer zweiten Platte (22), die mit einer Einrichtung zur Dreipunkt-Neigungseinstellung mittels einer Kugel (23) und zwei Schrauben (25 und 26) versehen ist, wobei die zweite Platte eine Nut (22A) in X-Richtung aufweist, einem dritten Stück (28) mit einer Schiene (28A) gegenüber der Nut, wobei das dritte Stück außerdem eine Nut (28B) in Y-Richtung aufweist, und einem vierten Stück (29) mit einer Schiene (29A) in Y-Richtung gegenüber der Nut in Y-Richtung und Mitteln zum Sperren mittels Schrauben (27, 30-1) der Neigungs- und Ausschnittseinstellungen.

7. Einrichtung gemäß Anspruch 6, dadurch gekennzeichnet, daß die Positionierungsmittel des dem zweiten Meßwertaufnehmer (2) entsprechenden Weges homolog versehen sind mit zwei ersten Platten (31 und 32) und der entsprechenden Neigungs- und Sperr-Einstelleinrichtung (37), wobei die zweite Platte (32) einen zylindrischen Teil aufweist und wobei eine mit dem Träger (5) verbundene dritte Platte (39) mit einer dem Zylinder entsprechenden gebohrten Aussparung (39A) versehen ist.

# FIG_1

COMMANDE
MISE AU
POINT

TRAITEMENT

AIGUILLAGE
OU
MÉLANGE

TRAITEMENT

SV1

SV2

MZ

# FIG_2

# FIG_3

# FIG_4

FIG_5